# FASCICULE DE BREVET EUROPEEN

(11) **EP 3 166 803 B1**
(45) Date de publication et mention de la délivrance du brevet: **09.10.2019**
(21) Numéro de dépôt: 15735704.7
(22) Date de dépôt: 10.07.2015
(51) Int. Cl.: B60C 13/00, B60C 13/02

(54) **PNEUMATIQUE COMPORTANT UN MARQUAGE A FORT CONTRASTE**
REIFEN MIT EINER HOCHKONTRASTMARKIERUNG
TIRE COMPRISING A HIGH CONTRAST MARKING.

(30) Priorité: 11.07.2014 FR 1456697
(43) Date de publication de la demande: 17.05.2017
(73) Titulaire: Compagnie Générale des Etablissements Michelin, 63000 Clermont-Ferrand (FR)
(72) Inventeur: MUHLHOFF, Olivier, F-63040 Clermont-Ferrand Cedex 9 (FR); DESVIGNES, Jean-Claude, F-63040 Clermont-Ferrand Cedex 9 (FR); EMORINE, Hélène, F-63040 Clermont-Ferrand Cedex 9 (FR); LARREGAIN, Arnaud, F-63040 Clermont-Ferrand Cedex 9 (FR)
(74) Mandataire: Demaure, Pierre-Yves
(86) Numéro de dépôt international: PCT/EP2015/065863
(87) Numéro de publication internationale: WO 2016/005572

(56) Documents cités:
- EP-A1- 1 462 277
- WO-A1-2012/171802
- WO-A1-2013/069802
- WO-A1-2013/113526
- WO-A1-2014/202729
- WO-A1-2014/202731
- DE-A1-102012 104 890

## Description

### DOMAINE DE L'INVENTION

La présente invention concerne un pneumatique pour véhicule automobile comportant une bande de roulement et un flanc, ledit pneumatique comprenant sur la bande de roulement et/ou ledit flanc un marquage faisant contraste avec la bande de roulement et/ou ledit flanc.

### ETAT DE LA TECHNIQUE

Les pneumatiques présentent une grande quantité de marquages destinés par exemple à donner des informations techniques et légales, à permettre aux consommateurs de distinguer l'origine du produit. Pour qu'ils soient bien visibles, les marquages sont en contraste par rapport à la bande de roulement et/ou ledit flanc.

A cet effet, il est devenu nécessaire d'améliorer l'esthétique des marquages tout en conservant la visibilité du marquage par rapport à la bande de roulement et/ou ledit flanc.

Le document WO 2013/113526 divulgue un pneumatique comportant un marquage sur un flanc. Ce marquage consiste en une représentation réaliste d'une photographie. Plus particulièrement, le marquage est composé d'une pluralité de nervures adjacentes présentant une section globalement triangulaire. L'espace entre deux nervures adjacentes est rempli avec un matériau complémentaire jusqu'à un certain niveau de remplissage. Le niveau de remplissage du matériau complémentaire détermine localement un niveau de gris du marquage.

L'invention a pour but de proposer une solution permettant de réaliser sur un pneumatique des marquages complexes, de type représentation photographique, d'une manière plus simple et plus économique que dans l'art antérieur.

### DEFINITIONS

Par « pneumatique », on entend tous les types de bandages élastiques soumis à une pression interne ou non.

Par « matériau caoutchoutique », on entend un élastomère diénique, c'est-à-dire de manière connue un élastomère issu d'au moins en partie (c'est-à-dire homopolymère ou un copolymère) de monomères diènes (monomères porteurs de deux doubles liaisons carbone-carbone, conjuguées ou non).

Par « bande de roulement » d'un pneumatique, on entend une quantité de matériau caoutchoutique délimitée par des surfaces latérales et par deux surfaces principales dont l'une, appelée surface de roulement, est destinée à entrer en contact avec une chaussée lorsque le pneumatique roule.

Par « flanc » d'un pneumatique, on entend une surface latérale du pneumatique disposée entre la bande de roulement du pneumatique et un bourrelet de ce pneumatique.

Par « texture », on entend un agencement organisé d'une pluralité d'éléments, tout ou partie des éléments de l'agencement étant la répétition d'un même élément de base, par exemple, un brin ou une lamelle.

Par « texture venue de matière avec la bande de roulement et/ou le flanc », on entend que la texture est dans le même matériau caoutchoutique que la bande de roulement et/ou le flanc du pneumatique. On obtient ainsi une texture sans ajout d'un autre matériau.

Par « brin », on entend un élément filiforme dont la hauteur est au moins égale à 2 fois le diamètre d'un disque de même surface que la section moyenne du brin.

Par « lamelles », on entend des brins allongés qui présentent une longueur au moins égale à deux fois leur hauteur.

Par « luminosité », « luminance », ou « clarté », on entend le paramètre qui caractérise la capacité d'une surface à réfléchir plus ou moins la lumière. La luminosité L* est exprimée dans une échelle allant de 0 à 100 selon le modèle colorimétrique L^{∗}a^{∗}b^{∗} établit par la CIE (Commission Internationale de l'Eclairage) en 1976. La valeur 100 représente le blanc ou la réflexion totale ; la valeur 0, le noir ou l'absorption totale. Dans ce modèle colorimétrique a* et b* sont des coordonnées de chromaticité, Le modèle colorimétrique L*a*b* définit également un diagramme de chromaticité. Dans ce diagramme, a* et b* indiquent la direction des couleurs : +a* va vers le rouge, -a* vers le vert, +b* vers le jaune, et -b* vers le bleu, Le centre du diagramme est achromatique, Au fur et à mesure que les valeurs a* et b* augmentent, et que l'on s'éloigne donc du centre du diagramme, la saturation augmente.

### RESUME DE L'INVENTION

L'invention concerne un pneumatique en matériau caoutchoutique comprenant une bande de roulement et un flanc, ledit pneumatique comprenant sur la bande de roulement et/ou ledit flanc un marquage faisant contraste avec la bande de roulement et/ou ledit flanc. Le marquage comporte au moins une première zone et une deuxième zone qui sont en contraste l'une par rapport à l'autre, La première zone comprend une luminosité, dite première luminosité, qui est comprise entre 0 et 15, la deuxième zone comprend une luminosité, dite deuxième luminosité, qui est supérieure à la première luminosité, L'écart de luminosité entre la première zone et la deuxième zone est d'au moins 1,5 unités. La première zone et la deuxième zone comportent chacune une texture particulière venue de matière avec le pneumatique et faisant contraste par rapport à ladite bande de roulement et/ou ledit flanc. La texture de la première zone diffère de la texture de la deuxième zone selon un des paramètres sélectionnés parmi les suivants :
- une densité d'éléments dans la texture ;
- une largeur des éléments dans la texture ;
- une hauteur des éléments dans la texture ;
- une profondeur des éléments dans la texture.

La texture comporte une pluralité d'éléments en protubérance et/ou en creux par rapport à la bande de roulement et/ou audit flanc, Les textures des différentes zones sont formées directement sur le pneumatique, sans apport d'un matériau complémentaire.

En définissant à l'intérieur du marquage au moins deux zones en contraste l'une par rapport à l'autre, on obtient un marquage composé de plusieurs nuances de gris. En maintenant une différence de luminosité d'au moins 3 unités, on s'assure d'un contraste suffisant entre les deux zones. Il est ainsi possible de réaliser un marquage complexe, par exemple de reproduire avec suffisamment de précision les détails d'une photographie. Etant donné que les textures des différentes zones sont formées directement sur le pneumatique, il n'est pas nécessaire de rapporter un matériau complémentaire comme dans l'art antérieur. La réalisation d'un marquage complexe sur le pneumatique est ainsi simplifiée. De plus, Les textures proposées ont aussi la particularité de posséder une certaine « stabilité » du niveau de gris en fonction de la direction d'éclairage (à puissance constante), donc de conserver la hiérarchie des classes de niveau de gris quand la ou les sources d'éclairage varient en position spatiale, pour des angles par rapport à la normale à la surface pouvant aller jusqu'à 45°. La texture obtenue est de type « velours » que ce soit au niveau du toucher ou au niveau visuel.

Dans un mode de réalisation non limitatif, la bande de roulement et/ou ledit flanc comprend une luminosité, dite troisième luminosité et la luminosité de deuxième zone est inférieure à cette troisième luminosité.

Cela permet d'obtenir une deuxième zone qui est en contraste par rapport à la première zone, mais également par rapport à la bande de roulement et/ou ledit flanc.

Dans un mode de réalisation non limitatif, la bande de roulement et/ou ledit flanc comprend une luminosité, dite troisième luminosité qui est supérieure ou égale à 18.

Cela permet de se rapprocher d'un certain niveau de blanc et donc d'obtenir un meilleur contraste avec le marquage.

Dans une variante de réalisation non limitative, ladite troisième luminosité est supérieure ou égale à 20.

Dans un mode de réalisation non limitatif, tout ou partie des éléments en protubérance sont des brins répartis dans la texture selon une densité au moins égale à un brin par millimètre carré (mm²), chaque brin ayant une section moyenne comprise entre 0,0005 mm² et 1 mm².

Dans un mode de réalisation non limitatif, tout ou partie des éléments en protubérance sont des lamelles sensiblement parallèles entre elles, le pas des lamelles dans la texture étant au plus égal à 0,5 mm, chaque lamelle ayant une largeur moyenne comprise entre 0,02 mm et 0,25 mm.

Dans un mode de réalisation non limitatif, tout ou partie des éléments en protubérance forme des parallélépipèdes de côté compris entre 0,05 mm et 0,5 mm, de hauteur comprise entre 0,05 mm et 0,5 mm, la distance entre deux parallélépipèdes adjacents dans la texture étant comprise entre 0,05 mm et 0,5 mm.

Dans un mode de réalisation non limitatif, les éléments en protubérance présentent dans la texture des formes et des distances entre éléments en protubérance variables.

Cela permet de créer de l'aléatoire dans la texture, ce qui permet de rendre moins visible ces éléments.

Dans un mode de réalisation non limitatif, les premiers éléments en creux forment des ouvertures sur la bande de roulement et/ou le flanc, et la texture comprend une pluralité d'ouvertures, ces ouvertures étant réparties dans la texture selon une densité au moins égale à une ouverture par millimètre carré (mm²), ces ouvertures présentant des diamètres équivalents compris entre 0,01 mm et 1,2 mm.

Cela permet d'obtenir une texture de type « velours » au niveau visuel.

Dans un autre mode de réalisation, le marquage comprend au moins trois zones avec des luminances différentes.

Dans un autre mode de réalisation, le marquage est une représentation photographique.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** représente schématiquement une vue en perspective d'une partie d'un pneumatique selon un premier mode de réalisation non limitatif de l'invention, le pneumatique comportant une bande de roulement et un flanc, ledit flanc comprenant un marquage ;
- la **figure 2** représente schématiquement une vue en perspective d'une partie d'un pneumatique selon un deuxième mode de réalisation non limitatif de l'invention, le pneumatique comportant une bande de roulement et un flanc, ladite bande de roulement comprenant un marquage ;
- la **figure 3** représente schématiquement une vue en perspective d'une partie d'un pneumatique selon un troisième mode de réalisation non limitatif de l'invention, le pneumatique comportant une bande de roulement et un flanc, ladite bande de roulement et ledit flanc comprenant chacun un marquage conformément à l'invention ;
- la **figure 4** représente une partie d'une texture composant le marquage des **figures 1 à 3****,** selon une première variante de réalisation non limitative d'un premier mode de réalisation de ladite texture selon lequel la texture présente des éléments en protubérance ;
- la **figure 5** représente une partie d'une texture composant le marquage des **figures 1 à 3****,** selon une deuxième variante de réalisation non limitative d'un premier mode de réalisation de ladite texture selon lequel la texture présente des éléments en protubérance ;
- **la** **figure 6** représente une partie d'une texture composant le marquage des **figures 1 à 3****,** selon une troisième variante de réalisation non limitative d'un premier mode de réalisation de ladite texture selon lequel la texture présente des éléments en protubérance ;
- la **figure 7** représente une partie d'une texture composant le marquage des **figures 1 à 3****,** selon une quatrième variante de réalisation non limitative d'un premier mode de réalisation de ladite texture selon lequel la texture présente des éléments en protubérance ;
- la **figure 8** représente une partie d'une texture composant le marquage des **figures 1 à 3****,** selon un deuxième mode de réalisation de ladite texture selon lequel la texture présente des éléments en creux ; et
- la **figure 9** représente une vue agrandie d'une cavité d'un élément en creux de la texture de la **figure 8****.**

Dans la description qui va suivre, des éléments sensiblement identiques ou similaires seront désignés par des références identiques,

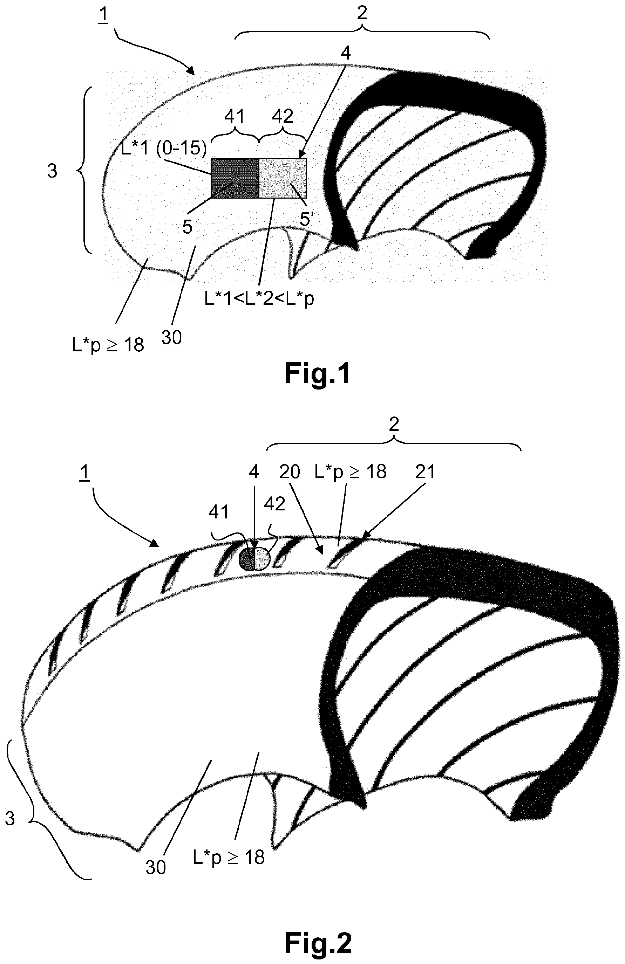

Sur les **figures 1 à 3** est représenté une partie du pneumatique 1 comportant une bande de roulement 2 et un flanc 3, ledit pneumatique 1 comprenant sur la bande de roulement 2 et/ou ledit flanc 3 un marquage 4 faisant contraste avec la bande de roulement 2 et/ou ledit flanc 3.

Dans des exemples non limitatifs, un marquage 4 comporte des informations techniques et légales, un élément graphique destiné à distinguer l'origine du produit, ou une image.

La **figure 1** représente une partie du pneumatique 1 comportant une bande de roulement 2 et un flanc 3 selon un premier mode de réalisation non limitatif. Selon ce mode, le flanc 3 comporte un marquage 4.

La **figure 2** représente une partie du pneumatique 1 comportant une bande de roulement 2 et un flanc 3 selon un deuxième mode de réalisation non limitatif. Selon ce mode, la bande de roulement 2 comporte un marquage 4 qui est un élément graphique.

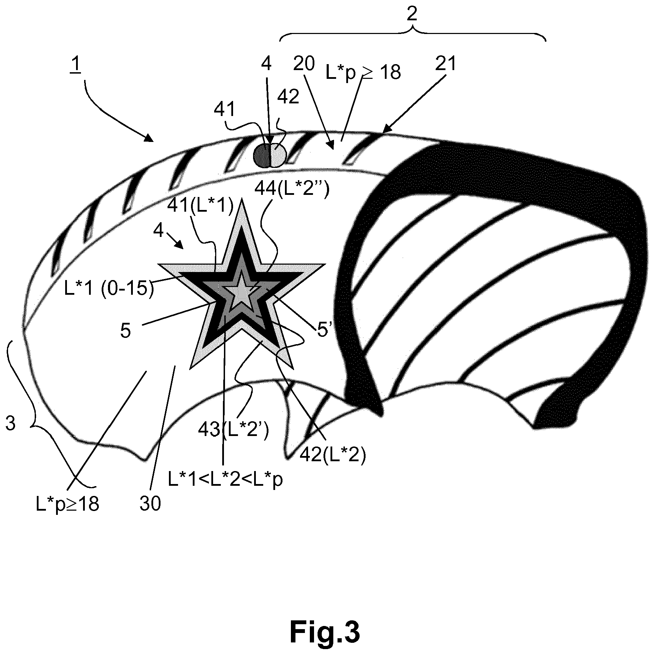

La **figure 3** représente une partie du pneumatique 1 comportant une bande de roulement 2 et un flanc 3 selon un troisième mode de réalisation non limitatif. Selon ce mode, la bande de roulement 2 comporte un premier marquage 4 qui est un élément graphique et le flanc 3 comporte un deuxième marquage 4 qui est une image, Dans l'exemple pris, l'image représente quatre étoiles imbriquées les unes par rapport aux autres.

Selon les **figures 1 et 2**, le marquage 4 fait contraste respectivement avec le flanc 3 et la bande de roulement 2, et il comporte une première zone 41 et une deuxième zone 42 qui sont en contraste l'une par rapport à l'autre.

Selon la **figure 3**, les marquages 4 font contraste avec la bande roulement 2 et le flanc 3, le premier marquage 4 sur la bande de roulement 2 qui est un élément graphique comporte une première zone 41 et une deuxième zone 42 qui sont en contraste l'une par rapport à l'autre, et le deuxième marquage 4 sur le flanc 3 qui est une image comporte une pluralité de zones 41, 42, 43, 44 qui sont en contraste les unes par rapport aux autres.

Autrement dit, une zone est en contraste avec chaque zone qui lui est adjacente. Ainsi, dans l'exemple non limitatif de la **figure 3**, le deuxième marquage 4 comporte :
- une première zone 41 (qui a un aspect noir) qui est en contraste avec :
- une deuxième zone 42 adjacente (qui a un aspect gris foncé) ;
- une troisième zone 43 adjacente (qui a un aspect gris clair) ;
- la deuxième zone 42 qui est en contraste avec une quatrième zone 44 adjacente (qui a un aspect gris plus clair).

Ainsi, en multipliant les zones qui sont en contraste les unes avec les autres, on obtient des dégradés de gris qui donnent différents niveaux de contraste. On peut ainsi jouer sur les différents dégradés de gris pour donner un aspect plus esthétique au marquage 4 du pneumatique 1.

Dans un mode de réalisation non limitatif, la première zone 41 comprend une luminosité L^{∗}1, dite première luminosité, qui est comprise entre 0 et 15.

En caractérisant la luminosité de la première zone 41, on obtient une zone d'aspect noir et qui est en contraste par rapport à la bande de roulement 2 dans le cas de la **figure 1** ou par rapport au flanc 3 dans le cas de la **figure 2** ou par rapport aux deux dans le cas de la **figure 3****.**

Par ailleurs, la deuxième zone 42 comprend une luminosité L^{∗}2, dite deuxième luminosité qui est supérieure à la première luminosité L^{∗}1 et inférieure à la luminosité L^{∗}p, dite troisième luminosité du flanc dans l'exemple de la **figure 3**.

De cette manière, en caractérisant la luminosité d'au moins deux zones 41 et 42, on obtient un marquage 4 qui absorbe suffisamment la lumière et qui est suffisamment en contraste par rapport à la bande de roulement 2 et/ou ledit flanc 3. D'autre part, cela permet d'effectuer des dégradés de gris allant du gris clair jusqu'au noir, de sorte à faire bien ressortir une zone par rapport à l'autre.

Ainsi, dans les exemples non limitatifs des **figures 1 et 2**, la première zone 41 comporte une luminosité L^{∗}1 qui lui donne un aspect noir, tandis que la deuxième zone 42 comporte une luminosité L^{∗}2 qui lui donne un aspect gris.

Dans le cas où le marquage 4 est une image qui comporte une pluralité de zones 41, 42, 43, 44 etc., le fait d'avoir des contrastes entre différentes zones de l'image permet de faire ressortir les différents détails de cette image. Dans l'exemple non limitatif de la **figure 3**, on distingue bien les différentes étoiles. Cela permet à une image d'être plus réaliste,

Ainsi, dans l'exemple non limitatif de la **figure 3** :
- la première zone 41 comporte une luminosité L^{∗}1 qui lui donne un aspect noir ;
- la deuxième zone 42 adjacente à la première zone 41 comporte une luminosité L^{∗}2 supérieure à L^{∗}1 qui lui donne un aspect gris foncé ;
- la troisième zone 43 adjacente à la première zone 41 comporte une luminosité L^{∗}2' supérieure à L^{∗}1 et à L^{∗}2 qui lui donne un aspect gris clair ;
- la quatrième zone 44 adjacente à la deuxième zone 42 comporte une luminosité L^{∗}2" supérieure à L^{∗}1 et à L^{∗}2 qui lui donne un aspect gris plus clair. Dans l'exemple pris, L^{∗}2" est égale à L^{∗}2'.

Le contraste est d'autant plus marqué entre les différentes zones 41, 42, 43, 44 et le flanc 3 que ledit flanc 3 comporte une troisième luminosité L^{∗}p supérieure ou égale à 18. Dans une variante de réalisation non limitative, la troisième luminosité L^{∗}p est supérieure ou égale à 20.

On notera que les valeurs entre 15 et 18 sont représentatives de certains niveaux de gris. Ainsi, en jouant sur la luminosité de la deuxième zone 42, de la troisième zone 43, de la quatrième zone 44 dans cette plage de valeurs, on peut obtenir différents niveaux de gris qui vont être en contraste par rapport au niveau de noir de la première zone 41 et au niveau blanc du flanc 3 dans l'exemple pris. Il est possible de choisir un écart constant de luminosité entre les différentes zones 41, 42, 43, 44 pour améliorer l'effet visuel de l'image formé par ces différentes zones. Dans le cas de quatre zones, cet écart de luminosité peut être de 3 unités. En variante, pour un marquage comprenant 2 zones, l'écart de luminosité peut être de 6 unités. Dans une autre variante, pour un marquage comprenant 5 zones, l'écart de luminosité peut être de 2,5. Dans une autre variante, pour un marquage comprenant 6 zones, l'écart de luminosité peut être de 2. En jouant sur les niveaux de gris des différentes zones de base, il est possible de réaliser un marquage complexe, par exemple de reproduire avec suffisamment de précision les détails d'une photographie.

On notera que lorsque le flanc 3 est lisse, des essais effectués par l'entité inventive ont montré que le flanc 3 comportait en général une luminosité comprise entre 23 et 25. De même, lorsque le flanc 3 comporte des rainures (qui donnent un aspect esthétique au flanc), des essais effectués par l'entité inventive ont montré que le flanc 3 comportait une luminosité sensiblement égale à 20.

Dans un mode de réalisation non limitatif, la première zone 41 et la deuxième zone 42 comporte chacune une texture particulière 5, 5' faisant contraste par rapport à la bande de roulement et/ou ledit flanc. Ainsi, lorsque le marquage 4 comporte plus de deux zones, comme dans l'exemple de la **figure 3**, l'ensemble des différentes zones 41, 42, 43, 44 du marquage 4 comporte chacune une texture particulière faisant contraste par rapport au flanc 3.

La texture est en matériau caoutchoutique. Dans un mode de réalisation non limitatif, la texture est venue de matière avec la bande de roulement et/ou ledit flanc (par exemple les brins ou les lamelles décrits plus loin sont en matériau caoutchoutique venu de matière avec le pneumatique).

Dans un premier mode de réalisation non limitatif, la texture 5 de la première zone 41 comporte des éléments différents de la texture 5' de la deuxième zone 42. Ainsi, lorsque le marquage 4 comporte plus de deux zones, comme dans l'exemple de la **figure 3**, au moins deux zones comportent des textures avec des éléments différents.

Dans un deuxième mode de réalisation non limitatif, la texture 5 de la première zone 41 comporte les mêmes éléments que la texture 5' de la deuxième zone 42.

Ainsi, lorsque le marquage 4 comporte plus de deux zones, comme dans l'exemple de la **figure 3**, au moins deux zones comportent des textures avec des éléments identiques.

Les textures 5 et 5' sont décrites ci-après selon différents modes de réalisation non limitatifs.

Selon un premier mode de réalisation non limitatif, la texture 5, 5' comprend une pluralité d'éléments en protubérance par rapport à la bande de roulement et/ou audit flanc, et plus particulièrement par rapport à la surface où se trouve ledit marquage 4, à savoir la surface 30 du flanc 3 dans le cas illustré à la **figure 1** ou la surface de roulement 20 de la bande de roulement 2 dans le cas illustré à la **figures 2** ou la surface 30 du flanc 3 et la surface de roulement 20 de la bande de roulement 2 dans le cas illustré à la **figures 3**.

L'effet de ces éléments en protubérance est de « piéger » une grande quantité des rayons lumineux incidents qui rencontrent la texture 5, 5'. Dans ce premier mode de réalisation, la texture 5, 5' (appelée « velours ») permet d'obtenir, d'une part, un visuel de type « velours » car les éléments en protubérance absorbent la lumière et rendent ainsi le marquage plus noir, et d'autre part, un toucher de type « velours », lesdits éléments en protubérance procurant un marquage agréable au toucher.

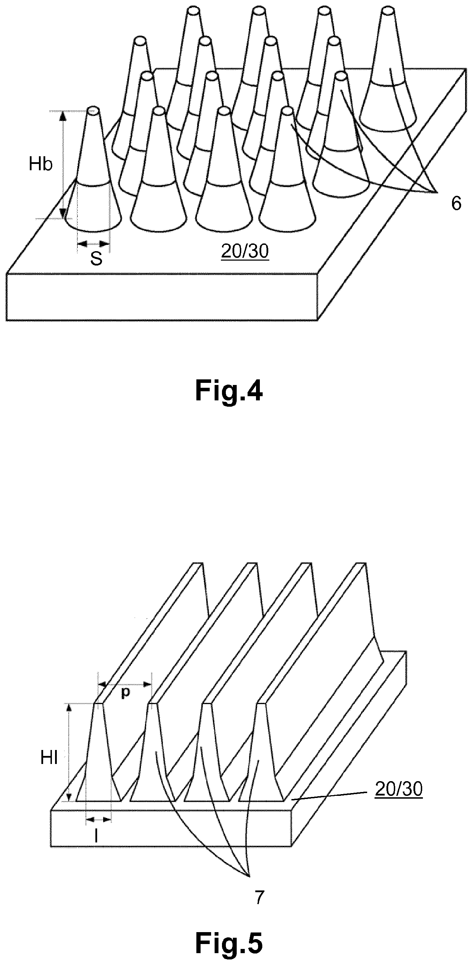

La **figure 4** illustre la texture 5, 5' selon une première variante de réalisation non limitative du premier mode de réalisation. Dans cette variante, tout ou partie des éléments en protubérance sont des brins 6 répartis dans la texture 5, 5' selon une densité au moins égale à un brin par millimètre carré (mm²), chaque brin ayant une section moyenne S comprise entre 0,0005 mm² et 1 mm². On notera que la section moyenne de chaque brin correspond à la moyenne des sections S mesurées à intervalles réguliers depuis la base du brin. Les brins 6 ont une forme globalement conique avec une section diminuant dans la hauteur Hb de ces brins.

La **figure 5** illustre la texture 5, 5'selon une deuxième variante de réalisation non limitative du premier mode de réalisation. Dans cette variante, tout ou partie des éléments en protubérance sont des lamelles 7 sensiblement parallèles entre elles, le pas P des lamelles dans la texture étant compris entre 0,1 mm et 0,5 mm, chaque lamelle 7 ayant une largeur moyenne comprise entre 0,02 mm et 0,25 mm. On notera que la largeur moyenne correspond à la moyenne des largeurs l mesurées à intervalles réguliers dans la hauteur Hl de la lamelle, la hauteur de chaque lamelle étant comprise entre 0,05 et 0,5 mm.

Dans une autre variante de réalisation, la texture comporte une combinaison de brins 6 et de lamelles 7.

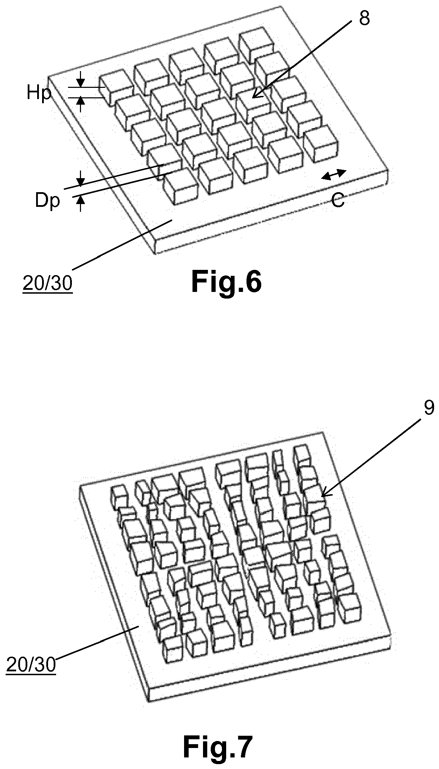

La **figure 6** illustre la texture 5, 5' selon une troisième variante de réalisation non limitative du premier mode de réalisation. Dans cette variante, tout ou partie des éléments en protubérance forme des parallélépipèdes 8 de côté C compris entre 0,05 mm et 0,5 mm, de hauteur Hp comprise entre 0,05 mm et 0,5 mm, la distance Dp entre deux parallélépipèdes adjacents 8 dans la texture étant comprise entre 0,05 mm et 0,5 mm.

Dans une autre variante de réalisation, la texture comporte une combinaison des éléments en relief 6, 7 et 8, ou 6 et 8, ou encore 7 et 8 décrits ci-dessus.

La **figure 7** illustre la texture 5, 5' selon une quatrième variante de réalisation non limitative du premier mode de réalisation. Dans cette variante, les éléments en protubérance 9 présentent dans la texture 5, 5' des formes et des distances entre éléments en protubérance variables. Cette variante permet de rendre moins visible les éléments en protubérance sur la texture 5, 5'.

Ainsi, lorsque la texture 5 de la première zone 41 comporte les mêmes éléments que la texture 5' de la deuxième zone 42, les deux textures 5 et 5' diffèrent selon au moins un des paramètres sélectionnés parmi les suivants :
- une densité d'éléments 6, 7, 8, 9, 10, 11 dans la texture 5, 5' ;
- une largeur des éléments dans la texture 5, 5'. Cela s'applique notamment pour les éléments en forme de lamelles 7 vus précédemment ;
- une hauteur des éléments dans la texture 5, 5'. Cela s'applique notamment pour les éléments en forme de parallélépipèdes 8 vus précédemment ;
- une profondeur des éléments dans la texture 5, 5'. Cela s'applique notamment pour les éléments en forme de cavités 12 vus précédemment.

La différenciation selon au moins un de ces paramètres permet de caractériser la première luminosité L^{∗}1 et la deuxième luminosité L^{∗}2 et ainsi de mettre en oeuvre le contraste entre la première zone 41 et la deuxième zone 42

Selon un deuxième mode de réalisation non limitatif, la texture 5, 5' comprend une pluralité d'éléments en creux 10 (appelés également trous) par rapport la bande de roulement 2 et/ou audit flanc 3, et plus particulièrement par rapport à la surface où se trouve ladite texture 5, 5', à savoir la surface 30 du flanc 3 dans le cas illustré à la **figure 1** ou la surface de roulement 20 de la bande de roulement 2 dans le cas illustré à la **figure 2** ou la surface 30 du flanc 3 et la surface de roulement 20 de la bande de roulement 2 dans le cas illustré à la **figures 3**. Les éléments en creux 10 sont composés d'ouvertures 11 sur la bande de roulement et/ou sur ledit flanc et de cavités 12 associées s'étendant dans la profondeur de la surface 20 et/ou 30.

Ainsi, la texture 5, 5' comprend une pluralité d'ouvertures 11 sur la bande de roulement et/ou le flanc, lesdites ouvertures 11 étant réparties dans la texture 5, 5' selon une densité au moins égale à une ouverture par millimètre carré (mm²) et présentant sur la surface des diamètres Dt équivalents compris entre 0,01 mm et 1,2 mm.

Les ouvertures 11 se prolongent dans la profondeur de la surface 20 et/ou 30 pour former des cavités 12.

L'effet de ces cavités 12 est de « piéger » une grande quantité des rayons lumineux incidents qui rencontrent la texture 5, 5', mais également d'offrir une plus grande pérennité de la texture 5, 5'. En effet, comme les cavités 12 sont en creux dans la surface, l'impact des agressions mécaniques sur la texture, tels que des frottements d'une chaussée est plus faible que pour des protubérances. Dans ce deuxième mode de réalisation, la texture 5, 5' (appelée « velours ») permet d'obtenir un visuel de type « velours » car les cavités absorbent la lumière et rendent ainsi le marquage plus foncé.

Dans un mode de réalisation non limitatif, tout ou partie des cavités 12 a une profondeur au moins égale à 0,1mm. Dans une variante de réalisation non limitative, tout ou partie des cavités 12 a une profondeur comprise entre 0,2 mm et 0,6 mm. De cette manière, on s'assure qu'une grande quantité de rayons lumineux incidents qui rencontre la texture 5, 5' est piégée par ladite texture et, comme la profondeur des cavités est limitée, on évite également de trop dégrader la résistance mécanique de la surface 20 et/ou 30.

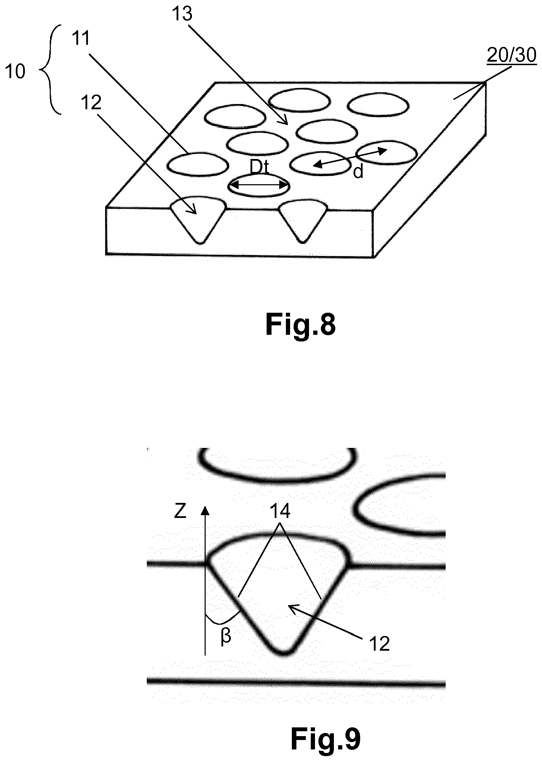

La **figure 8** illustre la texture 5, 5' selon une variante non limitative de ce deuxième mode de réalisation. Dans cette variante, tout ou partie des cavités 12 sont en forme de cônes qui s'étendent dans la profondeur de la surface 20 et/ou 30 et débouchent sur la surface en formant des ouvertures circulaires 11. Les cavités 12 ont ainsi une section qui diminue dans la profondeur de la surface. De cette manière, on améliore le contraste de la texture 5, 5' par rapport à la bande de roulement 2 et/ou au flanc 3. On notera que dans cette variante, les ouvertures 11 des cavités 12 ne se touchent pas, Les ouvertures 11 sont séparées par des zones intermédiaires 13. En outre, les ouvertures 11 sont régulièrement réparties sur tout ou partie de la surface 20/30 délimité par le marquage 4 de sorte que la distance d entre chaque ouverture de la texture est globalement similaire.

La **figure 9** est un zoom sur une cavité 12 d'un élément en creux 10 de la texture de la **figure 8**. Dans un mode de réalisation non limitatif, tout ou partie des cavités a au moins une paroi 14 qui, selon une vue en coupe, forme un angle β compris entre 10° et 60° par rapport à une direction Z perpendiculaire à la texture 5,5'.

A chaque fois qu'un rayon lumineux rencontre une paroi 14 de la cavité 12, celui-ci est réfléchi par ladite paroi 14. La direction de réflexion du rayon lumineux dépend de la direction initiale de ce rayon lumineux et de l'angle d'inclinaison de la paroi 14. Ainsi, en fonction de cette direction initiale et de cet angle d'inclinaison, le rayon lumineux peut être renvoyé vers une autre paroi 14 de la cavité. A l'inverse, le rayon lumineux peut être renvoyé à l'extérieur de la cavité, par exemple directement vers un observateur, Dans le premier cas, le rayon lumineux « se perd » dans la cavité et il ne sera plus perceptible par l'oeil d'un observateur. Dans le second cas, l'observateur peut percevoir le rayon lumineux et la texture peut apparaître alors comme étant plus claire et donc moins en contraste vis-à-vis de la bande de roulement et/ou ledit flanc. En choisissant une cavité 12 ayant au moins une paroi 14 qui forme un angle β compris entre 10° et 60°, on s'assure qu'une grande partie des rayons lumineux rentrant dans la cavité 12 va être absorbée par cette cavité sous l'effet de réflexions multiples à l'intérieur de la cavité. De cette manière, on améliore le contraste de la texture 5, 5' par rapport à la bande de roulement et/ou ledit flanc, tout en conservant le même taux d'occupation des cavités dans la texture. En outre, avec cette inclinaison de paroi, on améliore globalement la résistance de la texture, notamment lors de frottements répétés avec la chaussée.

L'invention n'est pas limitée aux exemples décrits et représentés et diverses modifications peuvent y être apportées sans sortir de son cadre.

Ainsi, selon une autre variante de réalisation non limitative, les lamelles 7 de la **figure 5** peuvent être discontinues. Elles présentent une partie plane entre elles. Elles peuvent en outre présenter entre elles des différences de section. De plus, les lamelles peuvent posséder des courbures ou des angles, notamment dans leur longueur. Elles peuvent en outre, être de longueur variable.

Ainsi, selon une autre variante de réalisation non limitative, les ouvertures 11 de la **figure 8** peuvent avoir la forme circulaire, carrée, ou encore polygonales (par exemple hexagonales) et les cavités 12 correspondantes une forme de cylindres, de parallélépipèdes, ou encore de polygones. Avec ces deux dernières structures (carrée ou polygonale), il est possible d'organiser plus facilement les ouvertures 11 les unes par rapport aux autres de sorte à limiter la surface des zones intermédiaires 13 entre ces ouvertures. Avec de telles formes d'ouvertures, on peut arriver plus aisément à des taux conséquents d'occupation des ouvertures.

Ainsi, l'invention décrite présente notamment les avantages suivants :
- par la caractérisation de la luminosité des différentes zones du marquage, on obtient des dégradés de gris et de noir qui permettent une mise en relief des détails d'un marquage ;
- par la caractérisation de la luminosité des différentes zones du marquage, on obtient des contrastes au sein même d'un marquage ;
- elle permet d'augmenter le niveau esthétique d'un marquage par rapport à une solution qui n'utiliserait qu'un contraste en « noir » et « blanc » uniquement.

## Revendications

1. Pneumatique (1) en matériau caoutchoutique comprenant une bande de roulement (2) et un flanc (3), ledit pneumatique (1) comprenant sur la bande de roulement et/ou ledit flanc (3) un marquage (4) faisant contraste avec la bande de roulement (2) et/ou ledit flanc (3), où le marquage (4) comporte au moins une première zone (41) et une deuxième zone (42) qui sont en contraste l'une par rapport à l'autre et la première zone (41) comprend une luminosité (L^{∗}1), dite première luminosité, qui est comprise entre 0 et 15, la deuxième zone (42) comprend une luminosité (L^{∗}2), dite deuxième luminosité, qui est supérieure à la première luminosité (L^{∗}1), **caractérisé en ce que** l'écart de luminosité entre la première zone (41) et la deuxième zone (42) est d'au moins 1,5 unités et **en ce que** la première zone (41) et la deuxième zone (42) comportent chacune une texture particulière (5, 5') venue de matière avec le pneumatique et faisant contraste par rapport à ladite bande de roulement (2) et/ou ledit flanc (3) et **en ce que** la texture (5) de la première zone (41) comporte les mêmes éléments que la texture (5') de la deuxième zone (42) et la texture (5) de la première zone (41) diffère de la texture (5') de la deuxième zone (42) selon au moins un des paramètres sélectionnés parmi les suivants :
- une densité d'éléments (6, 11) dans la texture (5, 5') ;
- une largeur des éléments (7) dans la texture (5, 5') ;
- une hauteur des éléments (8) dans la texture (5, 5') ;
- une profondeur des éléments (12) dans la texture (5, 5')
et **en ce que** la texture (5, 5') comporte une pluralité d'éléments en protubérance (6, 7, 8, 9) et/ ou en creux (10) par rapport à la bande de roulement (2) et/ou ledit flanc (3) et **en ce que** les textures des différentes zones (41, 42) sont formées directement sur le pneumatique, sans apport d'un matériau complémentaire.

2. Pneumatique (1) selon la revendication 1, **caractérisé en ce que** la bande de roulement (2) et/ou ledit flanc (3) comprend une luminosité, dite troisième luminosité (L^{∗}p) et la luminosité (L^{∗}2) de la deuxième zone (42) est inférieure à cette troisième luminosité (L^{∗}p).

3. Pneumatique (1) selon la revendication 2, **caractérisé en ce que** la troisième luminosité (L^{∗}p) est supérieure ou égale à 18.

4. Pneumatique (1) selon l'une des revendications 2 à 3, **caractérisé en ce que** ladite troisième luminosité (L^{∗}p) est supérieure ou égale à 20.

5. Pneumatique (1) selon la revendication précédente 4, **caractérisé en ce que** tout ou partie des éléments en protubérance sont des brins (6) répartis dans la texture (5, 5') selon une densité au moins égale à un brin par millimètre carré (mm²), chaque brin ayant une section moyenne comprise entre 0,0005 mm² et 1 mm²,

6. Pneumatique (1) selon l'une quelconque des revendications 4 ou 5, **caractérisé en ce que** tout ou partie des éléments en protubérance sont des lamelles (7) sensiblement parallèles entre elles, le pas des lamelles dans la texture étant au plus égal à 0,5 mm, chaque lamelle ayant une largeur moyenne comprise entre 0,02 mm et 0,25 mm.

7. Pneumatique (1) selon l'une quelconque des revendications 4 à 6, **caractérisé en ce que** tout ou partie des éléments en protubérance forme des parallélépipèdes (8) de côté (C) compris entre 0,05 mm et 0,5 mm, de hauteur (H) comprise entre 0,05 mm et 0,5 mm, la distance entre deux parallélépipèdes adjacents dans la texture étant comprise entre 0,05 mm et 0,5 mm.

8. Pneumatique (1) selon l'une quelconque des revendications 4 à 7, **caractérisé en ce que** les éléments en protubérance (9) présentent dans la texture (3) des formes et des distances entre éléments en protubérance variables.

9. Pneumatique (1) selon l'une quelconque des revendications 4 à 8, **caractérisé en ce que** les premiers éléments en creux (10) forment des ouvertures (11) sur la bande de roulement (2) et/ou le flanc (3), et la texture (5, 5') comprend une pluralité d'ouvertures (11), ces ouvertures étant réparties dans la texture (5, 5') selon une densité au moins égale à une ouverture par millimètre carré (mm²), ces ouvertures présentant des diamètres équivalents compris entre 0,01 mm et 1,2 mm.

10. Pneumatique selon l'une quelconque des revendications 1 à 9, **caractérisé en ce que** le marquage comprend au moins trois zones (41, 42, 43, 44) avec des luminances différentes.

11. Pneumatique selon l'une quelconque des revendications 1 à 10, **caractérisé en ce que** le marquage est une représentation photographique.

## Patentansprüche

1. Reifen (1) aus Gummimaterial, umfassend einen Laufstreifen (2) und eine Flanke (3), der Reifen (1) umfassend auf dem Laufstreifen und/oder der Flanke (3) eine Markierung (4), die zu dem Laufstreifen (2) und/oder der Flanke (3) einen Kontrast bildet, wobei die Markierung (4) mindestens einen ersten Bereich (41) und einen zweiten Bereich (42) aufweist, die einen Kontrast zueinander bilden, und der erste Bereich (41) eine Helligkeit (L^{∗}1), die erste Helligkeit, umfasst, die zwischen 0 und 15 beträgt, der zweite Bereich (42) eine Helligkeit (L^{∗}2), die zweite Helligkeit, umfasst, die größer als die erste Helligkeit (L^{∗}1) ist, **dadurch gekennzeichnet, dass** die Helligkeitsabweichung zwischen dem ersten Bereich (41) und dem zweiten Bereich (42) mindestens 1,5 Einheiten beträgt, und dadurch, dass der erste Bereich (41) und der zweite Bereich (42) jeweils eine besondere Textur (5, 5') aufweisen, die mit dem Reifen einstückig ausgebildet ist und im Verhältnis zum Laufstreifen (2) und/oder der Flanke (3) einen Kontrast bildet, und dadurch, dass die Textur (5) des ersten Bereichs (41) dieselben Elemente wie die Textur (5') des zweiten Bereichs (42) aufweist und die Textur (5) des ersten Bereichs (41) gemäß mindestens einem der Parameter von der Textur (5') des zweiten Bereichs (42) abweicht, die aus den Folgenden ausgewählt sind:
- einer Dichte von Elementen (6, 11) in der Textur (5, 5');
- einer Länge der Elemente (7) in der Textur (5, 5') ;
- einer Höhe der Elemente (8) in der Textur (5, 5');
- einer Tiefe der Elemente (12) in der Textur (5, 5')
und dadurch, dass die Textur (5, 5') eine Mehrzahl von Elementen aufweist, die im Verhältnis zu dem Laufstreifen (2) und/oder der Flanke (3) abstehen (6, 7, 8, 9) und/oder vertieft (10) sind, und dadurch, dass die Texturen der verschiedenen Bereiche (41, 42) ohne Zusatz eines ergänzenden Materials direkt auf dem Reifen ausgebildet sind.

2. Reifen (1) nach Anspruch 1, **dadurch gekennzeichnet, dass** der Laufstreifen (2) und/oder die Flanke (3) eine Helligkeit, die dritte Helligkeit (L^{∗}p), umfasst, und die Helligkeit (L^{∗}2) des zweiten Bereichs (42) geringer als diese dritte Helligkeit (L^{∗}p) ist.

3. Reifen (1) nach Anspruch 2, **dadurch gekennzeichnet, dass** die dritte Helligkeit (L^{∗}p) größer oder gleich 18 ist.

4. Reifen (1) nach einem der Ansprüche 2 bis 3, **dadurch gekennzeichnet, dass** die dritte Helligkeit (L^{∗}p) größer oder gleich 20 ist.

5. Reifen (1) nach dem vorhergehenden Anspruch 4, **dadurch gekennzeichnet, dass** alle oder ein Teil der abstehenden Elemente Stiele (6) sind, die in der Textur (5, 5') gemäß einer Dichte verteilt sind, die mindestens gleich einem Stiel pro Quadratmillimeter (mm²) ist, wobei jeder Stiel einen mittleren Querschnitt zwischen 0,0005 mm² und 1 mm² aufweist.

6. Reifen (1) nach einem der Ansprüche 4 oder 5, **dadurch gekennzeichnet, dass** alle oder ein Teil der abstehenden Elemente Lamellen (7) sind, die im Wesentlichen parallel zueinander verlaufen, wobei der Abstand der Lamellen in der Textur höchstens gleich 0,5 mm ist, wobei jede Lamelle eine mittlere Länge zwischen 0,02 mm und 0,25 mm aufweist.

7. Reifen (1) nach einem der Ansprüche 4 bis 6, **dadurch gekennzeichnet, dass** alle oder ein Teil der abstehenden Elemente Parallelepipede (8) mit einer Seite (C) zwischen 0,05 mm und 0,5 mm, mit einer Höhe (H) zwischen 0,05 mm und 0,5 mm bildet, wobei der Abstand zwischen zwei benachbarten Parallelepipeden in der Textur zwischen 0,05 mm und 0,5 mm beträgt.

8. Reifen (1) nach einem der Ansprüche 4 bis 7, **dadurch gekennzeichnet, dass** die abstehenden Elemente (9) in der Textur (3) Formen und Abstände zwischen abstehenden Elementen aufweisen, die variabel sind.

9. Reifen (1) nach einem der Ansprüche 4 bis 8, **dadurch gekennzeichnet, dass** die ersten vertieften Elemente (10) Öffnungen (11) auf dem Laufstreifen (2) und/oder der Flanke (3) bilden und die Textur (5, 5') eine Mehrzahl von Öffnungen (11) umfasst, wobei diese Öffnungen in der Textur (5, 5') gemäß einer Dichte verteilt sind, die mindestens gleich einer Öffnung pro Quadratmillimeter (mm²) ist, wobei diese Öffnungen äquivalente Durchmesser zwischen 0,01 mm und 1,2 mm aufweisen.

10. Reifen nach einem der Ansprüche 1 bis 9, **dadurch gekennzeichnet, dass** die Markierung mindestens drei Bereiche (41, 42, 43, 44) mit unterschiedlichen Helligkeiten umfasst.

11. Reifen nach einem der Ansprüche 1 bis 10, **dadurch gekennzeichnet, dass** die Markierung eine photographische Darstellung ist.

## Claims

1. Tyre (1) made of rubber material, comprising a tread (2) and a sidewall (3), said tyre (1) comprising a marking (4) on the tread and/or said sidewall (3), said marking (4) contrasting with the tread (2) and/or said sidewall (3), said marking (4) having at least one first zone (41) and a second zone (42) which contrast with one another, and the first zone (41) comprises a lightness (L^{∗}1), referred to as first lightness, which is between 0 and 15, the second zone (42) comprises a lightness (L^{∗}2), referred to as second lightness, which is greater than the first lightness (L^{∗}1), **characterized in that** the difference in lightness between the first zone (41) and the second zone (42) is at least 1.5 units, and **in that** the first zone (41) and the second zone (42) each have a particular texture (5, 5') that is formed integrally with the tyre and contrasts with said tread (2) and/or said sidewall (3) and **in that** the texture (5) of the first zone (41) has the same elements as the texture (5') of the second zone (42) and the texture (5) of the first zone (41) differs from the texture (5') of the second zone (42) by at least one of the parameters selected from the following:
- a density of elements (6, 11) in the texture (5, 5');
- a width of the elements (7) in the texture (5, 5');
- a height of the elements (8) in the texture (5, 5');
- a depth of the elements (12) in the texture (5, 5')
and **in that** the texture (5, 5') has a plurality of elements (6, 7, 8, 9) protruding from the tread (2) and/or said sidewall (3) and/or a plurality of elements (10) recessed into the tread (2) and/or said sidewall (3) and **in that** the textures of the different zones are formed directly on the tyre, without adding an additional material.

2. Tyre (1) according to Claim 1, **characterized in that** the tread (2) and/or said sidewall (3) comprises a lightness, referred to as third lightness (L^{∗}p), and the lightness (L^{∗}2) of the second zone (42) is less than this third lightness (L^{∗}p).

3. Tyre (1) according to Claim 2, **characterized in that** the third lightness (L^{∗}p) is greater than or equal to 18.

4. Tyre (1) according to either of Claims 2 and 3, **characterized in that** said third lightness (L^{∗}p) is greater than or equal to 20.

5. Tyre (1) according to the preceding Claim 4, **characterized in that** all or some of the protruding elements are strands (6) distributed through the texture (5, 5') at a density at least equal to one strand per square millimetre (mm²), each strand having a mean cross section of between 0.0005 mm² and 1 mm².

6. Tyre (1) according to either one of Claims 4 and 5, **characterized in that** all or some of the protruding elements are substantially mutually parallel lamellae (7), the spacing of the lamellae in the texture being at most equal to 0.5 mm, each lamella having a mean width of between 0.02 mm and 0.25 mm.

7. Tyre (1) according to any one of Claims 4 to 6, **characterized in that** all or some of the protruding elements form parallelepipeds (8) having a side length (C) of between 0.05 mm and 0.5 mm and a height (H) of between 0.05 mm and 0.5 mm, the distance between two adjacent parallelepipeds in the texture being between 0.05 mm and 0.5 mm.

8. Tyre (1) according to any one of Claims 4 to 7, **characterized in that** the protruding elements (9) have variable shapes and distances between protruding elements in the texture (3).

9. Tyre (1) according to any one of Claims 4 to 8, **characterized in that** the first recessed elements (10) form openings (11) in the tread (2) and/or sidewall (3), and the texture (5, 5') comprises a plurality of openings (11), these openings being distributed through the texture (5, 5') at a density at least equal to one opening per square millimetre (mm²), these openings having equivalent diameters of between 0.01 mm and 1.2 mm.

10. Tyre according to any one of Claims 1 to 9, **characterized in that** the marking comprises at least three zones (41, 42, 43, 44) with different luminances.

11. Tyre according to any one of Claims 1 to 10, **characterized in that** the marking is a photographic representation.
